# EUROPEAN PATENT APPLICATION

(11) **EP 2 955 677 A1**
(43) Date of publication of application: **16.12.2015**
(21) Application number: 15171405.2
(22) Date of filing: 10.06.2015
(51) Int. Cl.: G06Q 20/34, G06Q 20/40

(54) **APPARATUS AND METHOD FOR PROCESSING CARD INFORMATION**

(30) Priority: 10.06.2014 US 201414301278
(71) Applicant: LG CNS Co., Ltd., Yeongdeungpo-gu Seoul 150-881 (KR)
(72) Inventor: You, Jo Geon, Seoul 150-881 (KR)
(74) Representative: V.O.

(57) **Abstract**

A method processes card information. The method includes transmitting, to a terminal, a hot list including one or both of a black list and a white list, which include information on whether cards are available or not, to a terminal, receiving, from the terminal, information on a smart card having a list region in or from which a flag is set or removed based on the hot list, from the terminal, and deleting, from the hot list, the information on the smart card having the list region in or from which the flag is set or removed.

## Description

### BACKGROUND

The background section provided herein is for the purpose of generally presenting the context of the disclosure. Work of the presently named inventors, to the extent the work is described in this section, as well as aspects of the description that may not otherwise qualify as prior art at the time of filing, are neither expressly nor impliedly admitted as prior art against the present disclosure.

A smart card is an electronic card including a micro-processor chip and a memory-embedded microcomputer, which are embedded in a plastic card according to a chip on board (COB) technique. Since a smart card having an integrated circuit mounted therein can store a large volume of information, smart cards may be used as prepaid cards for transportation and financial services.

### SUMMARY

Embodiments of the present disclosure have been made in an effort to provide a method and device capable of reducing the load which occurs in a terminal installed in a transportation means due to accumulated data of a hot list.

In accordance with an embodiment of the present disclosure, a method of processing card information includes: transmitting, to a terminal, a hot list including one or both of a black list and a white list, which include information on whether cards are available or not; receiving, from the terminal, information on a smart card having a list region in or from which a flag is set or removed based on the hot list; and deleting, from the hot list, the information on the smart card having the list region in or from which the flag is set or removed.

The method may further include generating the hot list.

The method may further include transmitting an updated hot list to the terminal. The updated hot list may include a hot list obtained by deleting the information on the smart card having the list region in or from which the flag is set or removed.

The method may further include storing the information on the smart card having the list region in or from which the flag is set or removed.

Receiving the information on the smart card may include receiving the information on the smart card having a black list region in which a flag is set based on the black list when the hot list includes the black list.

Deleting the information on the smart card may include deleting the information on the smart card having the black list region in which the flag is set, from the black list.

Receiving the information on the smart card may include receiving the information on the smart card having a black list region from which a flag is removed based on the white list when the hot list includes the white list.

Deleting the information on the smart card may include deleting the information on the smart card having the black list region from which the flag is removed, from the white list.

In accordance with another embodiment of the present disclosure, a method of processing card information includes: receiving, from a server, a hot list including one or both of a black list and a white list, which include information on whether cards are available or not; setting or removing a flag in or from a list region of a smart card based on the hot list; and transmitting, to the server, information on the smart card in or from which the flag is set or removed.

The method may further include storing or deleting a flag setting reason in or from the list region of the smart card.

The method may further include storing the hot list in a terminal.

The method may further include receiving an updated hot list from the server. The updated hot list may include a hot list obtained by deleting the information on the smart card in or from which the flag is set or removed.

When the hot list includes the black list, setting or removing the flag may include: setting a flag in a black list region of the smart card based on the black list; and storing a flag setting reason in the black list region.

Transmitting the information on the smart card may include transmitting, to the server, the information on the smart card having the black list region in which the flag is set.

When the hot list includes the white list, setting or removing the flag may include: removing a flag set in a black list region of the smart card based on the white list; and deleting a flag setting reason stored in the black list region of the smart region.

Transmitting the information on the smart card may include transmitting, to the server, the information on the smart card having the black list region from which the flag is removed.

In accordance with still another embodiment of the present disclosure, a server for processing card information includes: a transmitter/receiver configured to transmit, to a terminal, a hot list including one or both of a black list and a white list, which include information on whether cards are available or not, and receive, from the terminal, information on a smart card having a list region in or from which a flag is set or removed based on the hot list; and a processor configured to generate the hot list and delete, from the hot list, the information on the smart card having the list region in or from which the flag is set or removed.

The server may further include a memory configured to store the information on the smart card having the list region in or from which the flag is set or removed.

In accordance with further still another embodiment of the present disclosure, a terminal for processing card information includes: a processor configured to set or remove a flag in or from a list region of a smart card based on a hot list, the hot list including one or both of a black list and a white list which include information on whether cards are available or not; and a transmitter/receiver configured to receive, from a server, the hot list and transmit, to the server, information on the smart card having the list region in or from which the flag is set or removed.

The processor may further store or delete a flag setting reason in or from the list region of the smart card.

In accordance with further still another embodiment of the present disclosure, a non-transitory computer readable medium has stored thereon a program that, when executed, causes a processor to perform a method, the method including: transmitting, to a terminal, a hot list including one or both of a black list and a white list, which include information on whether cards are available or not; receiving, from the terminal, information on a smart card having a list region in or from which a flag is set or removed based on the hot list; and deleting, from the hot list, the information on the smart card having the list region in or from which the flag is set or removed.

In accordance with further still another embodiment of the present disclosure, a non-transitory computer readable medium has stored thereon a program that, when executed, causes a processor to perform a method, the method including: receiving, from a server, a hot list including one or both of a black list and a white list, which include information on whether cards are available or not; setting or removing a flag in or from a list region of a smart card based on the hot list; and transmitting, to the server, information on the smart card in or from which the flag is set or removed.

According to embodiments of the present disclosure, a flag may be set or removed in or from a list region of a smart card based on a hot list, and information on the smart card in or from which the flag is set or removed may be deleted from the hot list. Thus, it is possible to reduce the load which occurs in a terminal installed in a bus due to data accumulated in the hot list.

### BRIEF DESCRIPTION OF THE DRAWINGS

FIG. 1 illustrates a system for processing card information according to an embodiment of the present disclosure.
FIG. 2 is a flowchart illustrating a method of a server that processes card information according to a first embodiment of the present disclosure.
FIG. 3 is a flowchart illustrating a method of a server that processes card information according to a second embodiment of the present disclosure.
FIG. 4 is a flowchart illustrating a method of a server that processes card information according to a third embodiment of the present disclosure.
FIG. 5 is a flowchart illustrating a method of a terminal that processes card information according to a first embodiment of the present disclosure.
FIG. 6 is a flowchart illustrating a method of a terminal that processes card information according to a second embodiment of the present disclosure.
FIG. 7 is a flowchart illustrating a method of a terminal that processes card information according to a third embodiment of the present disclosure.
FIG. 8 illustrates operations performed among a server, a terminal, and a smart card to process card information according to an embodiment of the present disclosure.
FIG. 9 illustrates operations performed among a server, a terminal, and a smart card to process card information according to another embodiment of the present disclosure.
FIG. 10 illustrates a server according to an embodiment of the present disclosure.
FIG. 11 illustrates a terminal according to an embodiment of the present disclosure.

### DESCRIPTION OF SPECIFIC EMBODIMENTS

Hereafter, embodiments of the present disclosure will be described below in more detail with reference to the accompanying drawings. Throughout the drawings, like reference numerals refer to like parts.

The present disclosure describes various specific embodiments. However, embodiments are not limited thereto, but may include modifications, equivalents or substitutes thereof.

Terms used herein are used only for explaining specific embodiments, and are not intended to limit embodiments. Terms having a singular form do not exclude the possibility of plural forms unless the contrary is indicated. In this specification, the meaning of "include/comprise" or "have" specifies existence of a property, a figure, a step, a process, an element, a component, or a combination thereof which is described in the specification, but does not exclude the existence or possibility of one or more other properties, numbers, steps, processes, elements, components, or combinations thereof.

Terms used herein having technical or scientific meanings have the same meanings as generally understood by those skilled in the art to which the present disclosure pertains, unless a different meaning is indicated. Terms defined in a generally used dictionary should be interpreted to have meanings which coincide with contextual meanings in the related art. Unless otherwise indicated, terms used herein should not be interpreted as having excessively formal or technical meanings.

In the present disclosure, embodiments will be described with reference to the accompanying drawings, in which like reference numerals refer to like elements, regardless of reference numerals, and the duplicated descriptions thereof may be omitted. In addition, detailed descriptions related to well-known functions or configurations may be omitted so that embodiments are not unnecessarily obscured.

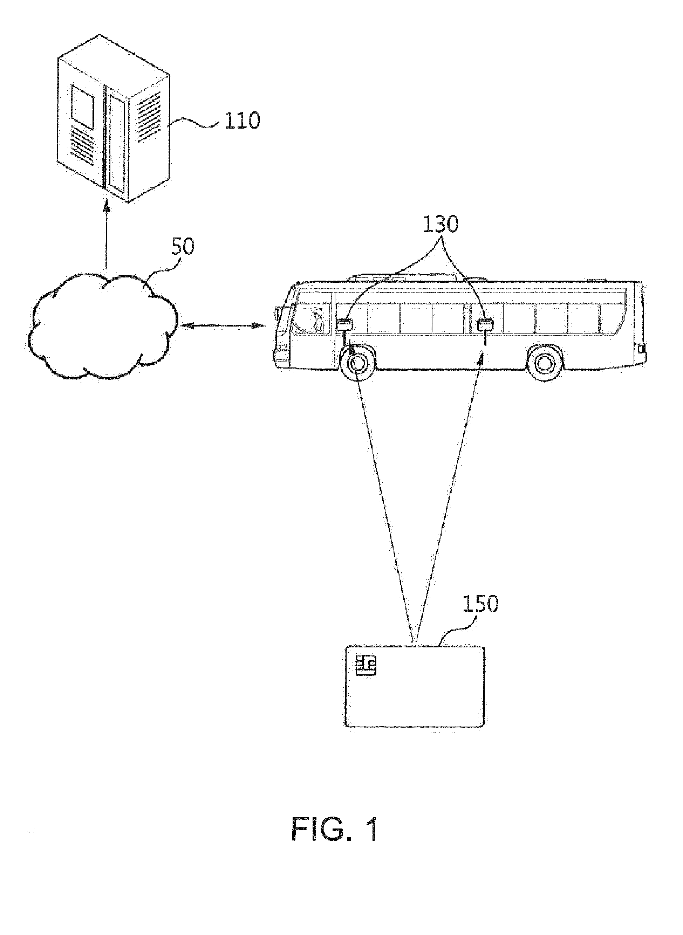

FIG. 1 illustrates a system for processing card information according to an embodiment of the present disclosure. The system includes a server 110, a terminal 130, and a card 150.

The server 110 may be coupled to the terminal 130 through a wireless communication network 50. The server 110 may transmit a hot list, which includes information on whether the card 150 is available or not, to the terminal 130. The card 150 may include a smart card. The hot list may include one or more of a 'black list' and a 'white list.'

The black list may include information on cards for which debit has exceeded a predetermined amount or cards that have had their use suspended or prohibited. The white list may include information on available cards, that is, cards having sufficient funds to complete a transaction. Furthermore, the white list may include information on cards that had previously been on the black list, but have become available because the suspension or prohibition for the cards has been lifted.

The terminal 130 may set or remove a flag in or from a list region of the smart card 150 based on the hot list received from the server 110. In an embodiment, the terminal 130 may form a region related to the hot list, that is, the list region in the smart card 150, set a flag in the list region when the smart card 150 is included in the hot list, and store the reason that the flag is set. Examples of the reason that the flag is set (hereafter, referred to as 'flag setting reason') may include the case in which a debit of a corresponding card has exceeded a predetermined amount and the case in which the use of the corresponding card has been suspended or prohibited. The flag setting reason may be stored in the smart card 150 using a binary code value corresponding to each of one or more predetermined reasons.

The terminal 130 may set or remove a flag in or from the list region of the smart card 150 and store the flag setting reason through radio frequency (RF) communication or near field communication (NFC).

In an embodiment, a flag related to the hot list may be set in a certain region of the smart card 150, and the flag setting reason may be stored in the certain region. As a result, it is possible to reduce an amount of accumulated data of the hot list which is to be managed by the terminal 130, which can reduce the storage load of the terminal 130.

The terminal 130 having set the flag in the list region of the smart card 150 may transmit to the server 110 information on a smart card having a list region in or from which a flag is set or removed.

The server 110 receiving the information on the smart card in or from which the flag is set or removed may update the hot list by deleting the information on the smart card in or from which the flag is set or removed from the hot list.

The server 110 may transmit the updated hot list to the terminal 130.

A single terminal or a plurality of terminals may be installed in a transportation means such as a bus, taxi, or other vehicle.

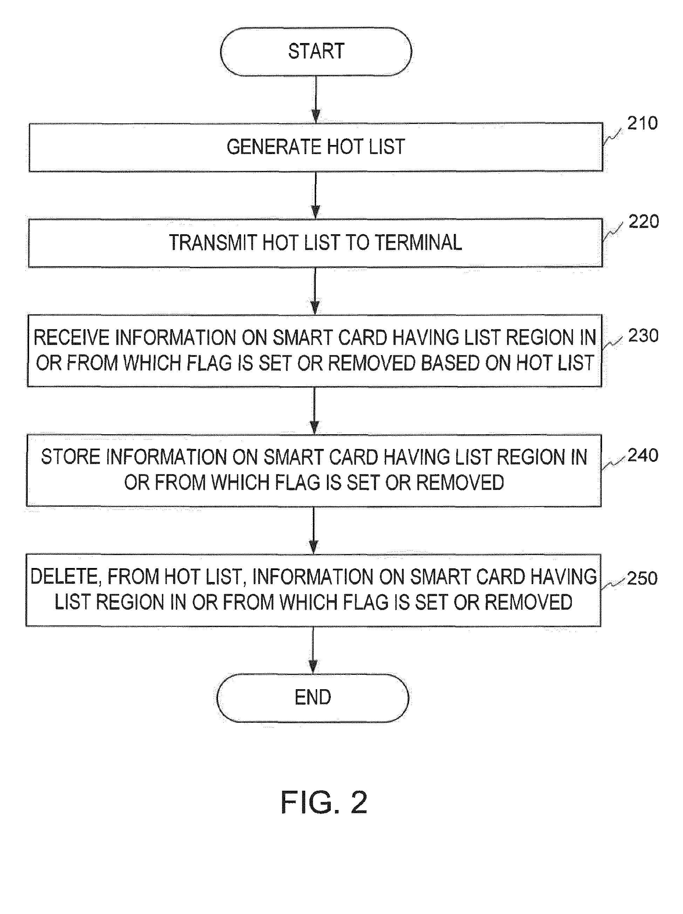

FIG. 2 is a flowchart illustrating a method of a server that processes card information according to a first embodiment of the present disclosure.

Referring to FIG. 2, the server generates a hot list at 210, and transmits the hot list to a terminal at 220. The hot list may include one or both of a black list and a white list, which include information on whether cards are available or not.

At 230, the server receives, from the terminal, information on a smart card having a list region in or from which a flag is set or removed based on the hot list.

The server stores the information on the smart card having the list region in or from which the flag is set or removed, at 240.

The server updates the hot list by deleting the information on the smart card having the list region in or from which the flag is set or removed, from the hot list at 250.

The server may transmit the updated hot list to the terminal. The updated hot list may include a hot list obtained by deleting the information on the smart card in or from which the flag is set or removed, from an initial hot list transmitted from the server.

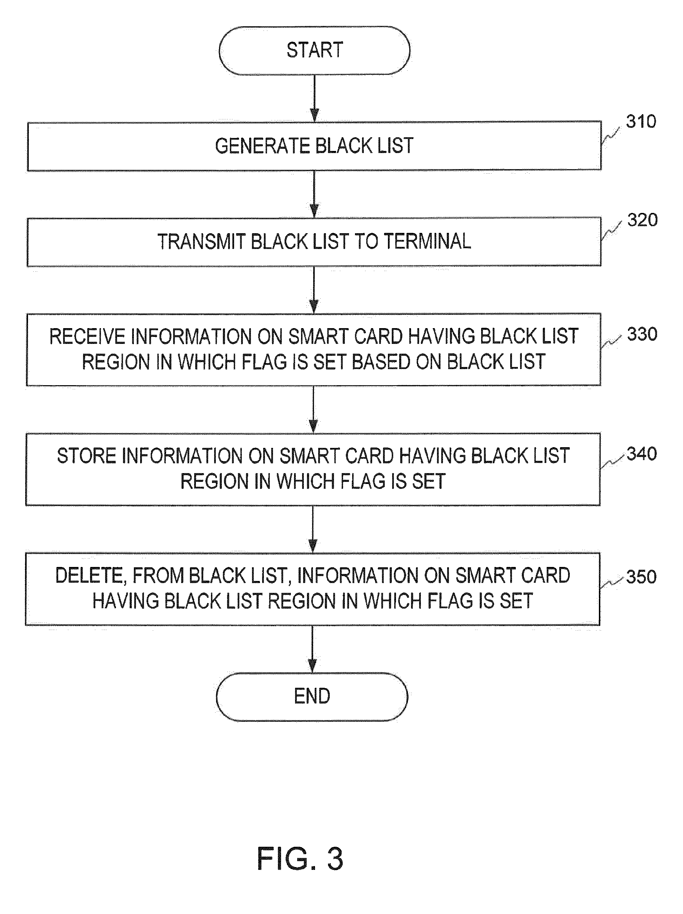

FIG. 3 is a flowchart illustrating a method of a server that processes card information according to a second embodiment of the present disclosure.

Referring to FIG. 3, the server generates a black list including information on whether cards are available or not, at 310, and transmits the black list to a terminal at 320. In an embodiment, the terminal may set a flag in a black list region of a smart card based on the black list received from the server.

At 330, the server receives, from the terminal, information on the smart card having the black list region in which the flag is set.

The server stores the information on the smart card having the black list region in which the flag is set, at 340.

The server deletes the information on the smart card having the black list region in which the flag is set, from the black list at 350.

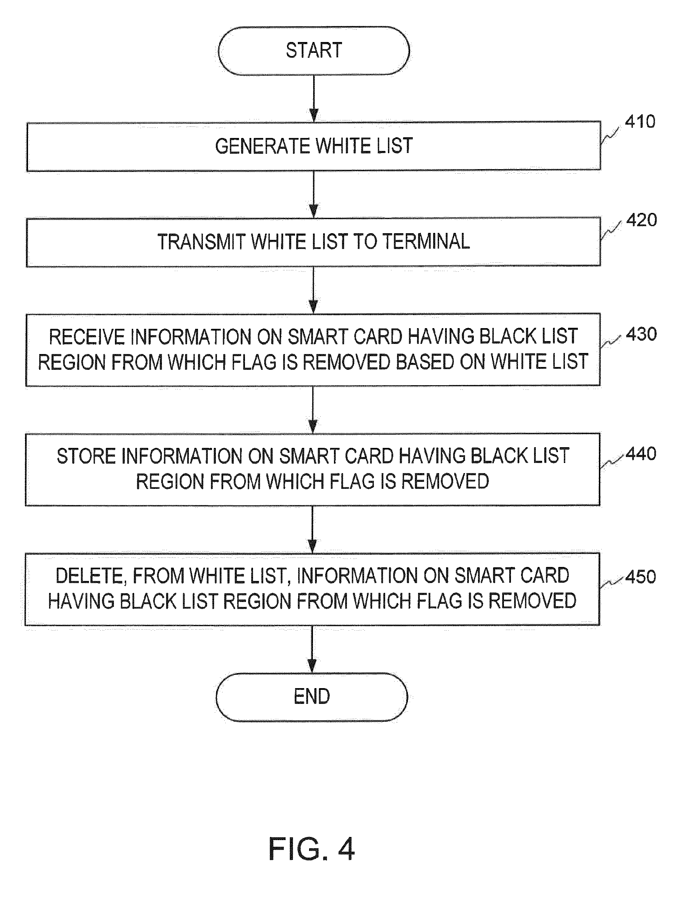

FIG. 4 is a flowchart illustrating a method of a server that processes card information according to a third embodiment of the present disclosure.

Referring to FIG. 4, the server generates a white list including information on whether cards are available or not, at 410, and transmits the white list to a terminal at 420. In an embodiment, the terminal may remove a flag set in a black list region of a smart card, based on the white list received from the server.

The server receives information on the smart card having the black list region from which the flag is removed, from the terminal at 430.

At 440, the server stores the information on the smart card having the black list region from which the flag is removed.

The server deletes the information on the smart card having the black list region from which the flag is removed, from the white list at 450.

In the above-described embodiments, the information on the smart card having the black list region in or from which the flag is set or removed may be deleted from the black list or the white list stored in the server. As a result, it is possible to reduce accumulated data of the black list or the white list, and thus the storage load of the server may be reduced.

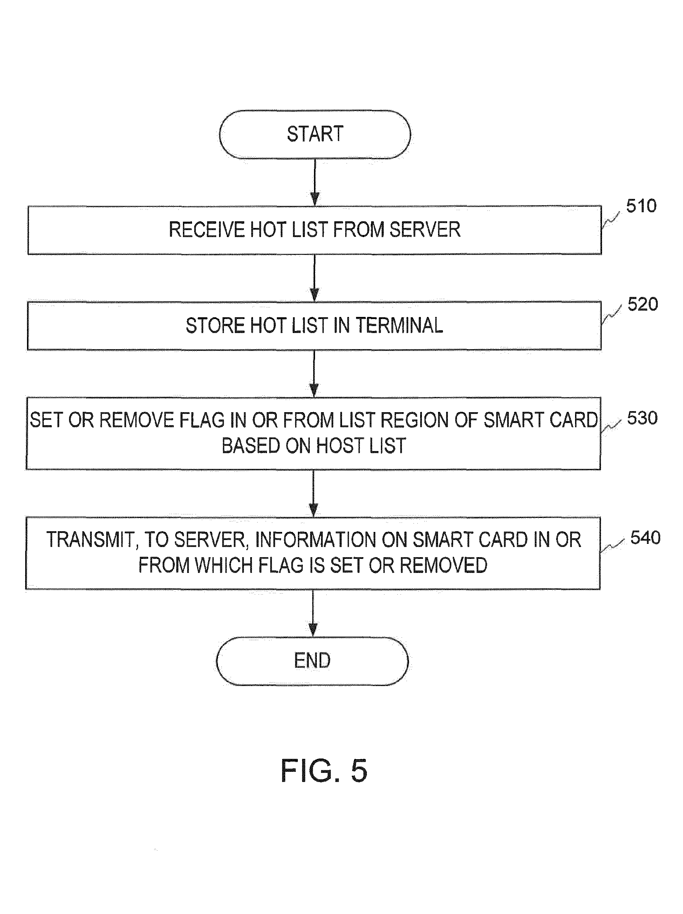

FIG. 5 is a flowchart illustrating a method of a terminal that processes card information according to a first embodiment of the present disclosure.

Referring to FIG. 5, the terminal receives a hot list from a server at 510. The hot list may include one or both of a black list and a white list which include information on whether cards are available or not.

At 520, the terminal stores the hot list received at 510 therein.

The terminal sets or removes a flag in or from a list region of the smart card based on the hot list, at 530. At this time, the terminal may also store or delete a flag setting reason in or from the list region of the smart card.

The terminal transmits the information on the smart card in or from which the flag is set or removed, to the server at 540.

The terminal may receive an updated hot list from the server. The updated hot list may be a hot list obtained by deleting the information on the smart card in or from which the flag is set or removed from the hot list that is stored in the server and transmitted to the terminal.

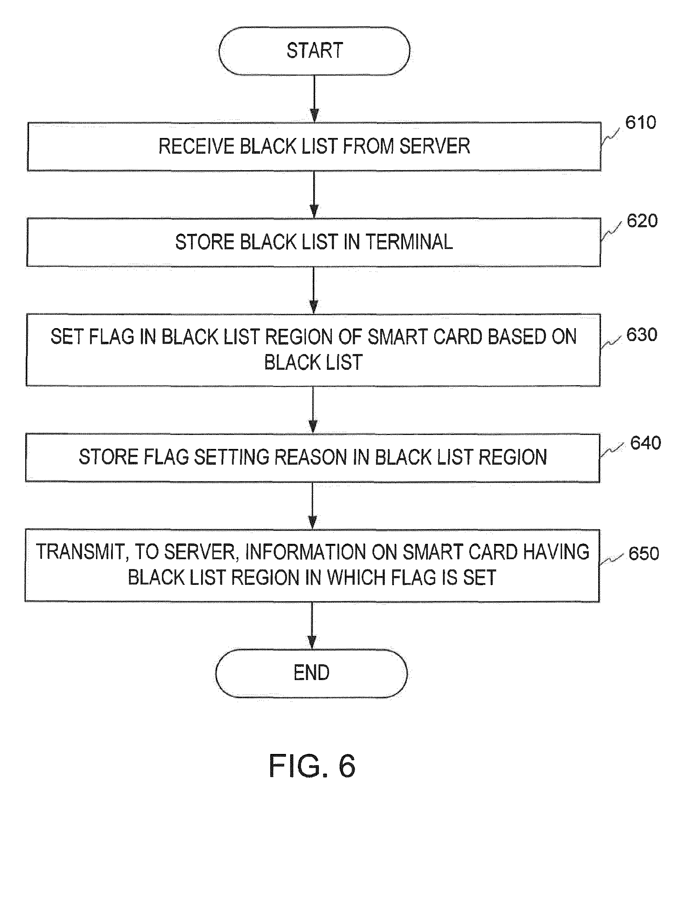

FIG. 6 is a flowchart illustrating a method of a terminal that processes card information according to a second embodiment of the present disclosure.

Referring to FIG. 6, the terminal receives a black list from a server at 610, and stores the black list therein at 620.

The terminal sets a flag in a black list region of a smart card based on the black list, at 630.

The terminal stores a flag setting reason in the black list region of the smart card at 640.

The terminal transmits information on the smart card having the black list region in which the flag is set, to the server at 650.

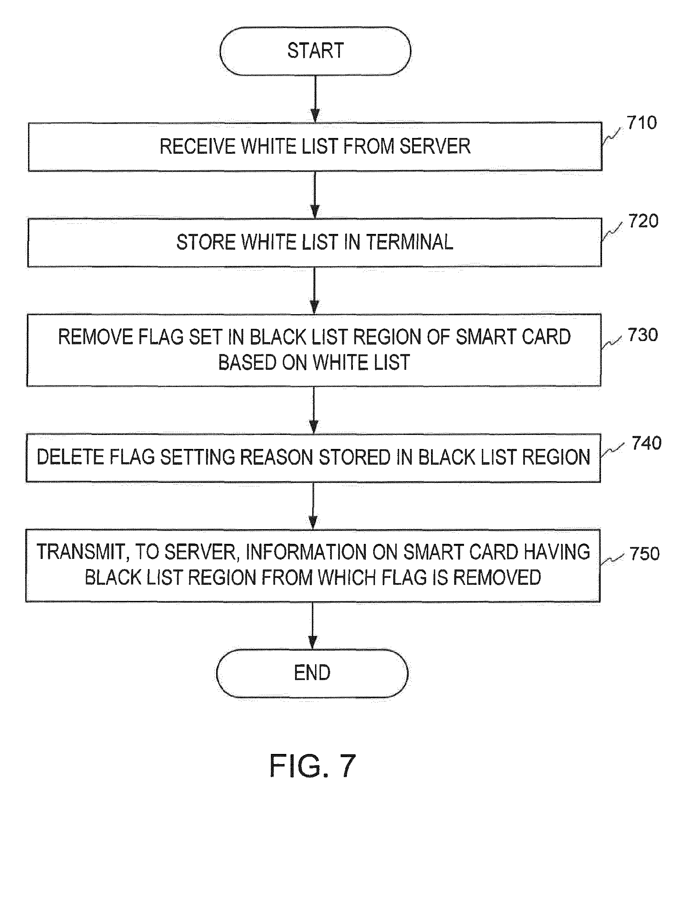

FIG. 7 is a flowchart illustrating a method of a terminal that processes card information according to a third embodiment of the present disclosure.

Referring to FIG. 7, the terminal receives a white list from a server at 710, and stores the white list therein at 720.

The terminal removes a flag set in a black list region of a smart card based on the white list, at 730.

The terminal deletes a flag setting reason stored in the black list region of the smart card at 740.

The terminal transmits information on the smart card having the black list region from which the flag is removed, to the server at 750.

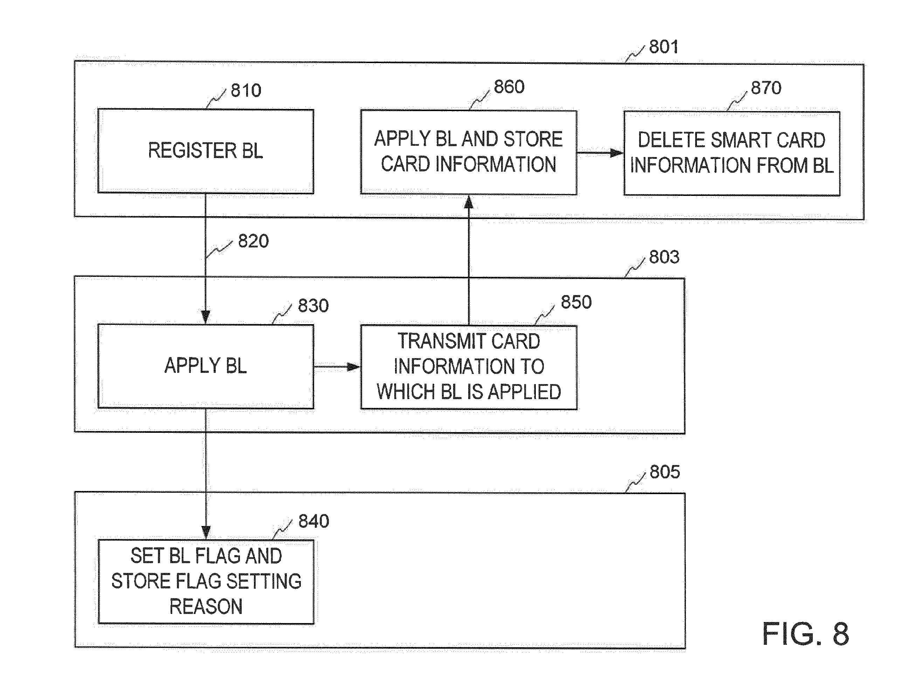

FIG. 8 illustrates operations performed by a system for processing card information according to an embodiment of the present disclosure. The system includes a server 801, a terminal 803, and a smart card 805.

The server 801 generates a black list (BL) including information on whether cards are available or not, and then registers the black list at 810.

The server 801 transmits the black list to the terminal 803 at 820.

The terminal 803 receiving the black list from the server 801 applies the black list at 830. At this time, the terminal 803 may store therein information on unavailable cards included in the black list, for example, card IDs and the reasons that the cards are unavailable.

The terminal 803 sets a flag in a black list region of the smart card 805 based on the black list at 840. The terminal 803 may also store the reason that the flag is set in the black list region of the smart card 805.

The terminal 803 may set the flag and/or store the flag setting reason in the black list region through RF communication.

The terminal 803 transmits information on a card to which the black list is applied, to the server 801 at 850. The card to which the black list is applied may be the smart card 805 having the black list region in which the flag is set.

The server 801 stores the information on the card to which the black list is applied, e.g., information on the smart card 805, which is received from the terminal 803, at 860.

The server 801 deletes the information on the smart card 805 from the registered black list at 870.

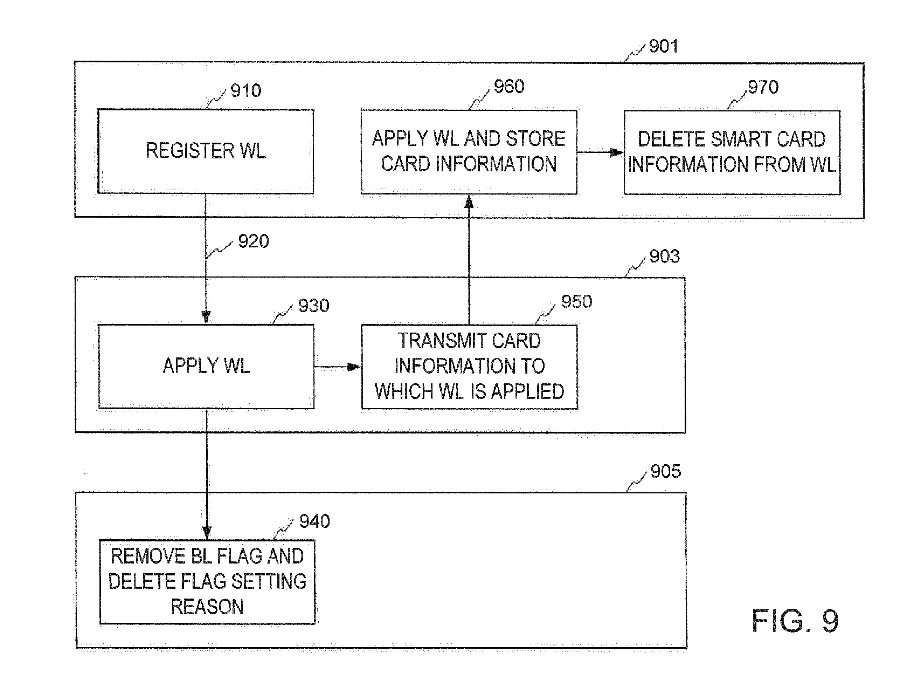

FIG. 9 illustrates operations performed by a system for processing card information according to another embodiment of the present disclosure. The system includes a server 901, a terminal 903, and a card 905.

The server 901 generates a white list (WL) including information on whether cards are available or not, and then registers the white list at 910.

The server 901 transmits the white list to the terminal 903 at 920.

The terminal 903 receiving the white list from the server 901 applies the white list at 930. The terminal 903 may store therein information on available cards included in the white list, such as card identifiers. The available cards may include cards which had been included in a black list so as not to be used, but are now available.

The terminal 903 removes a flag set in a black list region of the smart card 905 based on the white list, at 940. At this time, the terminal 903 may also delete a flag setting reason stored in the black list region.

The terminal 903 transmits information on a card to which the white list is applied, to the server 901 at 950. The card to which the white list is applied may be the smart card 905 having the black list region in which the flag had been set but has been removed based on the white list.

The server 901 stores the information on the card to which the white list is applied, e.g., information on the smart card 905, which is received from the terminal 903, at 960.

The server 901 deletes the information on the smart card 905 from the registered white list at 970.

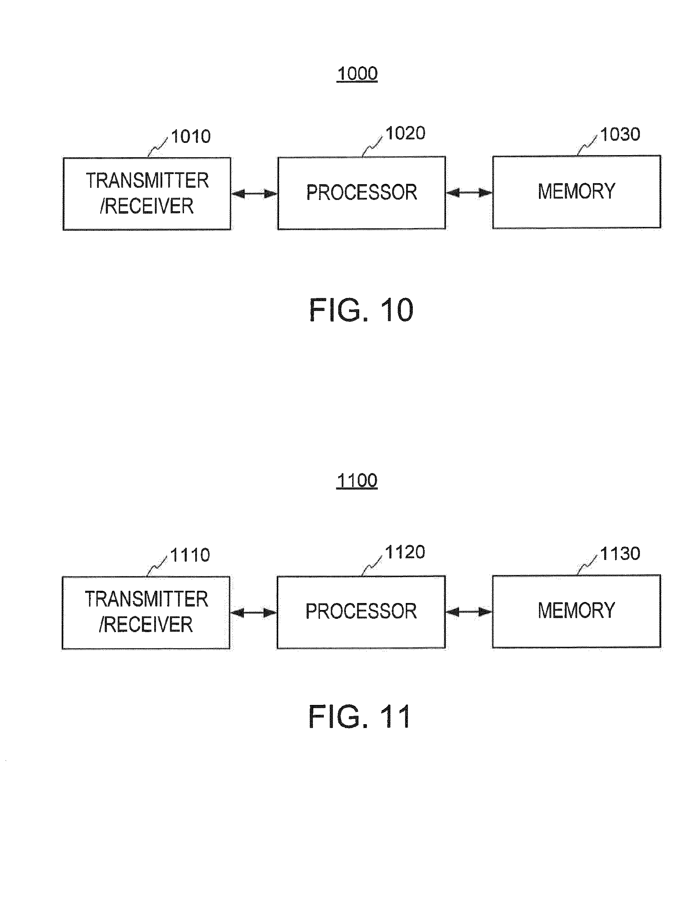

FIG. 10 illustrates a server according to an embodiment of the present disclosure. The server 1000 includes a transmitter/receiver 1010, a processor 1020, and a memory 1030. However, embodiments are not limited thereto. In accordance with embodiments, the server 1000 includes one or more other components in addition to the above components.

The transmitter/receiver 1010 may transmit a hot list to a terminal, the hot list including one or both of a black list and a white list which include information on whether cards are available or not. Furthermore, the transmitter/receiver 1010 may receive, from the terminal, information on a smart card having a list region in or from which a flag is set or removed based on the hot list.

The processor 1020 may generate the hot list, and delete the information on the smart card having the list region in or from which the flag is set or removed, from the hot list.

The memory 1030 may store the information on the smart card having the list region in or from which the flag is set or removed.

FIG. 11 illustrates a terminal according to an embodiment of the present disclosure. The terminal 1100 includes a transmitter/receiver 1110, a processor 1120, and a memory 1130. However, embodiments are not limited thereto. In accordance with embodiments, the terminal 1100 includes one or more other components in addition to the above components. The terminal 1100 may be installed in transportation means such as a bus, taxi, or other vehicle.

The transmitter/receiver 1110 may receive a hot list from a server, and transmit information on a smart card having a list region in or from which a flag is set or removed, to the server.

The processor 1120 may set or remove a flag in or from the list region of the smart card based on the hot list received from the server. The hot list may include one or both of a black list and a white list which are include information on whether the smart card is available or not.

The processor 1120 may store or delete a flag setting reason in or from the list region of the smart card.

The memory 1130 may store the hot list received from the server.

Methods according to embodiments of the present disclosure may be implemented in the form of program commands which can be executed by various computer devices, and the program command may be written in a non-transitory computer readable medium. The computer readable medium may store program command(s), a data file, a data structure, or a combination thereof. Examples of computer readable media may include magnetic media such as a hard disk, a floppy disk and a magnetic tape, optical media such as CD-ROM and DVD, magneto-optical media such as a floptical disk, and hardware devices, such as ROM, RAM and flash memory, configured to store and execute program command(s). Examples of the program commands may include a machine language code created by a compiler and a high-level language code executed by a computer using an interpreter or the like. The hardware device may be configured to operate as one or more software modules to perform embodiments of the present disclosure, and vice versa.

While embodiments have been described in the present disclosure, the present invention is not limited to the above-described embodiments, and it will be apparent to those skilled in the art that various changes and modifications may be made.

Thus, the scope of the present invention is not limited to the above-described embodiments, but may be defined by the following claims and equivalents to the claims.

## Claims

1. A method of processing card information of a server, the method comprising:
generating a hot list including one or both of a black list and a white list, which include information on whether cards are available or not;
transmitting, to a terminal, the hot list;
receiving, from the terminal, information on a smart card having a list region in or from which a flag is set or removed based on the hot list; and
deleting, from the hot list, the information on the smart card having the list region in or from which the flag is set or removed.

2. The method according to claim 1, further comprising:
transmitting an updated hot list to the terminal,
wherein the updated hot list comprises a hot list obtained by deleting the information on the smart card having the list region in or from which the flag is set or removed.

3. The method according to claim 1 or 2, further comprising:
storing the information on the smart card having the list region in or from which the flag is set or removed.

4. The method according to claim 1 or 2, wherein receiving the information on the smart card comprises receiving the information on the smart card having a black list region in which a flag is set based on the black list when the hot list includes the black list, and
receiving the information on the smart card having a black list region from which a flag is removed based on the white list when the hot list includes the white list.

5. The method according to claim 4, wherein deleting the information on the smart card comprises deleting the information on the smart card having the black list region in which the flag is set, from the black list.

6. The method according to claim 4, wherein deleting the information on the smart card comprises deleting the information on the smart card having the black list region from which the flag is removed, from the white list.

7. A method of processing card information of a terminal, the method comprising:
receiving, from a server, a hot list including one or both of a black list and a white list, which include information on whether cards are available or not;
setting or removing a flag in or from a list region of a smart card based on the hot list; and
transmitting, to the server, information on the smart card in or from which the flag is set or removed.

8. The method according to claim 7, further comprising storing or deleting a flag setting reason in or from the list region of the smart card.

9. The method according to claim 7 or 8, further comprising storing the hot list in a terminal.

10. The method according to any of the previous claims, further comprising:
receiving an updated hot list from the server,
wherein the updated hot list comprises a hot list obtained by deleting the information on the smart card in or from which the flag is set or removed.

11. The method according to any of the previous claims, wherein, when the hot list includes the black list, setting or removing the flag comprises:
setting a flag in a black list region of the smart card based on the black list; and
storing a flag setting reason in the black list region, and
wherein, when the hot list includes the white list, setting or removing the flag comprises:
removing a flag set in a black list region of the smart card based on the white list; and
deleting a flag setting reason stored in the black list region of the smart region.

12. The method according to any of the previous claims, wherein transmitting the information on the smart card comprises transmitting, to the server, the information on the smart card having the black list region in which the flag is set.

13. The method according to any of the previous claims, wherein transmitting the information on the smart card comprises transmitting, to the server, the information on the smart card having the black list region from which the flag is removed.

14. A server for processing card information, comprising:
a transmitter/receiver configured to transmit, to a terminal, a hot list including one or both of a black list and a white list, which include information on whether cards are available or not, and receive, from the terminal, information on a smart card having a list region in or from which a flag is set or removed based on the hot list; and
a processor configured to generate the hot list and delete, from the hot list, the information on the smart card having the list region in or from which the flag is set or removed,
a memory configured to store the information on the smart card having the list region in or from which the flag is set or removed.

15. A terminal for processing card information, comprising:
a processor configured to set or remove a flag in or from a list region of a smart card based on a hot list, the hot list including one or both of a black list and a white list which include information on whether cards are available or not; and
a transmitter/receiver configured to receive, from a server, the hot list and transmit, to the server, information on the smart card having the list region in or from which the flag is set or removed,
wherein the processor further stores or deletes a flag setting reason in or from the list region of the smart card.
